# EUROPEAN PATENT APPLICATION

(11) **EP 4 494 728 A1**
(43) Date of publication of application: **22.01.2025**
(21) Application number: 24189683.6
(22) Date of filing: 19.07.2024
(51) Int. Cl.: B01D 24/10, B01D 35/30, B01D 29/50, B01D 36/02, B01D 29/96, B01D 35/12

(54) **FILTER CARTRIDGE AND MOUNTING MECHANISM**

(30) Priority: 19.07.2023 US 202318223762
(71) Applicant: Avidity Science, LLC, Waterford WI 53185 (US)
(72) Inventor: Denton, Gareth, Cropredy, OX17 1NT (GB); Allen, Jeremy, Ingatestone, CM4 9EF (GB)
(74) Representative: Grünecker Patent- und Rechtsanwälte PartG mbB

(57) **Abstract**

A filter cartridge (16) includes a filter body (22; 222) having a first end and a second end, and an end plug (24; 28) having a neck portion (36; 38) disposed in the first end of the filter body (22). The end plug (24; 28) includes peripheral seals (48; 50) disposed on its necks portions (36; 38) and is configured to move axially with respect to the filter body (22) in response to forces generated by fluid pressure within the filter body (22) during operation of the filter cartridge (16) to force a face seal (62; 64) and the end plug (24; 28) against a seat on a filter cartridge holder (20). The filter cartridge holder (20) includes a first and second platens (74; 76) that are spaced apart from each other to receive the filter cartridge (16) and a clamp mechanism (80) that can be actuated to reduce the axial spacing between the first and second platens (74; 76) to compress the face seal (62; 64) of the filter cartridge (16) between them.

## Description

### BACKGROUND OF THE INVENTION

### 1. Field of the Invention

The present invention relates to a filter cartridge and holding mechanism. More particularly, the invention relates to a filter cartridge and holding mechanism for removably mounting the filter cartridge in a fluid filtration system. The invention additionally relates to a filtration system having such a filter cartridge system and to a method of installing and operating such a filtration system.

### 2. Discussion of the Related Art

Filter cartridges are well known in the art for filtering liquids including, but by no means limited to, potable water. They are known to contain a tubular housing with a filtration media or device disposed therein and having end caps that close the opposing ends of the tubular housing. One end cap may include a fluid port for delivering untreated liquid to the filter cartridge, while the other end cap may include a fluid port for delivering treated liquid from the filter cartridge. Alternatively, one end cap may deliver untreated liquid to the cartridge and receive treated liquid from the cartridge, while the other end cap is a sealed or "blanking" cap. In instances of a reverse osmosis (RO) filter cartridge, one or both of the end plugs may also include another port that conveys waste or rinse liquid away from the RO filter cartridge.

In instances known in the art, the end caps are usually welded, glued, pinned, or threaded to the ends of the tubular housing. In instances of welding or gluing, the caps cannot be removed without destroying the caps and/or the housing. Filter cartridges with welded or glued end caps cannot be reused or reprocessed, i.e., cleaned and reconditioned as necessary with new seals or other replaceable components. Cartridges with treaded end caps are more easily reused but are prone to leaks and bacteria traps at the threading, especially if they are not installed properly. These treads also present surfaces that are difficult to clean, hindering reuse of the cartridges.

Prior art filter cartridges also often have complex ports/connections that require that the installer properly connect two or more fittings, which poses a risk of leaks due to human error. The fittings themselves also may be prone to failure or leaks.

As such there is a need in the art for a filter cartridge having end caps that are both removable and less prone to leakage to allow for both reliable use and reusability of the filter cartridge.

There is also a need in the art for a filter cartridge holding mechanism that holds the filter cartridge in place and assists in forming seals at the ends of the filter cartridge during operation.

There is also a need in the art for filter cartridge that can be reliably installed with minimal skill by an operator, without having to manipulate fittings on the filter cartridge.

### SUMMARY OF THE INVENTION

In accordance with a first aspect of the invention, one or more of these needs is met by providing a filter cartridge that includes a filter body having a first end and a second end. An end plug is disposed in the first end of the filter body. The functional end plug includes at least one port formed in an outer axial end thereof and a face seal surrounding the port and configured to seal against a seat of a holding assembly. The end port opens into an interior of the filter cartridge. At least one peripheral seal is located between an outer peripheral surface of the plug and an inner peripheral surface of the housing. The end plug is dimensioned and configured to move axially outwardly under forces generated by liquid pressure in the filter cartridge to force the face seal into sealing engagement with the seat of the holding assembly.

The end plug may be a first end plug, and a second end plug may be disclosed at the second end of the filter body. The second end plug may include no ports or at least one port formed in an outer axial end thereof and a face seal surrounding the port and configured to seal against a seat of the filter housing assembly. As with the first end plug, the second end plug is dimensioned and configured to move axially outwardly in response to a linear force generated by liquid pressure in the filter cartridge to force the face seal into sealing engagement with the associated seat of the filter housing assembly.

One or more peripheral seals may be located between each end plug and the tubular body. The seals may be inserted into grooves in the outer peripheral surfaces of the end plugs or in inner groves in the tube body and move axially with the end plugs. Alternatively, the seals may be inserted into inner grooves in the tubular body and allow the end plugs to move past the seals mounted in the tube body.

Each end plug may include an outer portion that is a larger diameter than an inner diameter of the filter body, an inner neck portion that is of a smaller diameter than a diameter of the outer portion and that is smaller than the inner diameter of the filter body. Each end plug may additionally include a stepped portion disposed between the outer portion and inner neck portion and having a diameter larger than the diameter of the inner neck portion and smaller than the diameter of the outer portion. As a result, a recess is aligned with the stepped portion and disposed between the outer portion of the end plug and the respective end of the filter body. This recess can receive a tool to remove the end plug from the filter body.

Another aspect of the invention includes a method of forming such a filter cartridge by installing an end plug into a corresponding end of the filter body.

According to yet another aspect of the invention, a filter cartridge holder for the filter cartridge includes first and second axially spaced platens, each of which presents a holding and sealing surface for engaging a respective end of the filter cartridge. A clamp mechanism is selectively operable to alter the spacing between the first and second platens to capture the filter cartridges between the first and second holding surfaces.

The clamp mechanism may include upper and lower axially-spaced disc plates and an intermediary translatable disc plate located between the first and second disc plates. Movement of the translation disc plate causes the upper disc plate to move axially of the filter cartridge away from the lower disc plate, increasing the spacing between the first and second platens.

The clamp mechanism may comprise a cam mechanism between the intermediary translation disc plate and at least one of the upper disc plate and the lower disc plate. The cam may include a cam follower including a ball and a cam including a ramped groove formed in one or both faces of the translation disc plate and one or both of the upper and lower disc plates.

Also disclosed is a filtration assembly having one or more filter cartridges and/or one or more of the filter holders configured as described herein.

These, and other objects, advantages, and aspects of the invention, will become apparent from the following description. The particular objects and advantages described herein can apply to only some embodiments falling within the claims and thus do not define the scope of the invention. In the description, reference is made to the accompanying drawings which form a part hereof, and in which there is shown a preferred embodiment of the invention. Such an embodiment does not necessarily represent the full scope of the invention and reference is made, therefore, to the claims herein for interpreting the scope of the invention.

### BRIEF DESCRIPTION OF THE DRAWINGS

Preferred exemplary embodiments of the invention are illustrated in the accompanying drawings in which like reference numerals represent like parts throughout, and in which:
FIG. 1 is a semi-exploded isometric view of a filtration system having a number of filter cartridges removably mounted therein in accordance with the invention;
FIG. 2 is an isometric view of one of the filter cartridges of FIG. 1 and its associated filter cartridge holder in an open position;
FIG. 3 is a top view of the filter cartridge of FIG. 2;
FIG. 4 is a cross-sectional view of the filter cartridge of FIGS. 2 and 3, aligned with the associated filter cartridge holder in an open position;
FIG. 5 is an enlarged cross-sectional view of FIG. 4 taken along lines 5-5;
FIG. 6 is an enlarged cross-sectional view similar to FIG. 5, but with the filter cartridge holder in a closed position;
FIG. 7A is an exploded isometric view of a cam mechanism;
FIG. 7B is a cross-sectional view of the cam mechanism of FIG. 7A in the closed position;
FIG. 7C is a cross-sectional view of the cam mechanism of FIGS. 7A and 7B in the open position;
FIG. 8 is an enlarged cross-sectional view of the upper end of the filter cartridge of FIGS. 2-4, taken along lines 8-8;
FIG. 9 is an exploded isometric view of an upper portion of the filter cartridge FIGS. 2-4 and 8 and an adjacent fixed platen of the filter cartridge holder;
FIG. 10 is a cross-sectional view similar to FIG. 5 and showing another filter cartridge of the filtration system;
FIG. 11 is a cross-sectional view similar to FIG. 8 and showing the filter cartridge of FIG. 10; and
FIG. 12 is a top view of the filter cartridge of FIGS. 10 and 11.

### DETAILED DESCRIPTION OF THE PREFERRED EMBODIMENTS

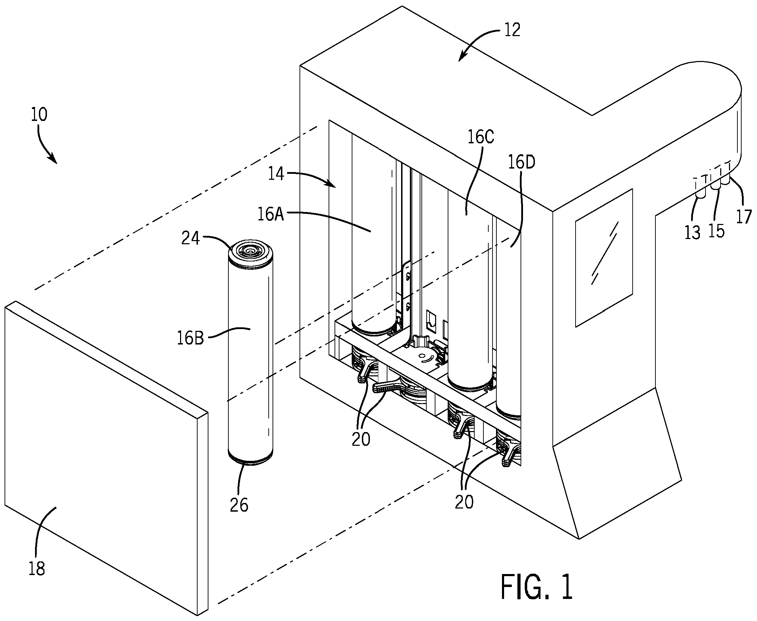

Referring now to FIG. 1, a filtration system 10 is shown that is configured to treat a fluid such as water. The filtration system 10 includes a housing 12 surrounding at least one cavity 14 receiving one or more filter cartridges 16 for filtering the fluid. Four filter cartridges 16A-16D are provided in the present embodiment, though the invention is applicable to systems having as few as one cartridge and to systems having two, three, four, or more. The cartridges 16A-16D may be identical or may store different media and/or be of a different type. For example, one or more of the cartridges 16A-16D may store a granular media such as activated caron, or additional cartridges could have a porous membrane or mechanical filters, and still other(s) could be reverse osmosis (RO) type filters. In the present example, filter cartridge 16D is an RO filter cartridges having three ports, and the remaining filter cartridges 16A-16C are more "generic" filter cartridges having two ports. The housing 12 includes an access hatch or door 18, which when removed provides access to the cavity 14 containing the cartridges 16A-16D. The housing 12 may include additional cavities containing other components, such as electrical components, controllers, etc. FIG. 1 illustrates one filter cartridge 16B removed from the filtration system 10, while the remaining filter cartridges 16A, 16C, and 16D are held by filter cartridge holders 20. The filter cartridge 16B and its associated holder 20 will be described in further detail below. The housing 12 further includes a first port 13, a second port 15, and a third port 17. For example, the first port 13 may be an inlet port 13 for untreated fluid, the second port 15 may be an outlet port 15 for treated fluid, and the third port 17 may be a drain port 17 for waste fluid, such as wastewater or rinsewater.

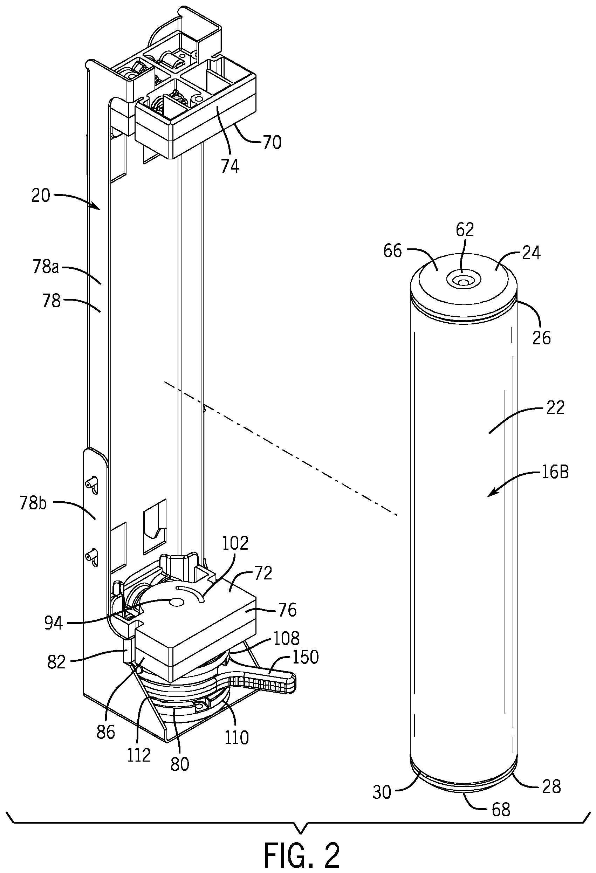

FIG. 2 illustrates an isometric view of filter cartridge 16B and an associated holder 20 according to a representative embodiment of the invention. Unless otherwise specified, the description of filter cartridge 16B applies equally to filter cartridge 16A and 16C, and the description filter cartridge holder 20 applies equally to all filter cartridge holders. The filter cartridge 16 includes a tubular filter body 22 having an open first upper end 26, an open second or lower end 30, and an inner peripheral wall 60 bounding a hollow interior having a filtration medium (not shown) disposed therein. The upper and lower ends 26 and 30 of filter body are closed by a first, upper end plug 24 and a second, lower end plug 28, respectively. All of these components typically are formed from plastic, but some or all of them could be formed from a metal. Each end plug 24, 28 may include a fluid port 32, 34, respectively, that opens into a respective passage extending through the plug 24, 28 and into the interior of the filter body 22 to allow fluid to enter and leave the filter cartridge 16 in a manner that is, per se, well known. It is also conceivable that two or more ports and associated passages could be formed in one or both of the plugs 24 or 28 and that the other plug could lack ports.

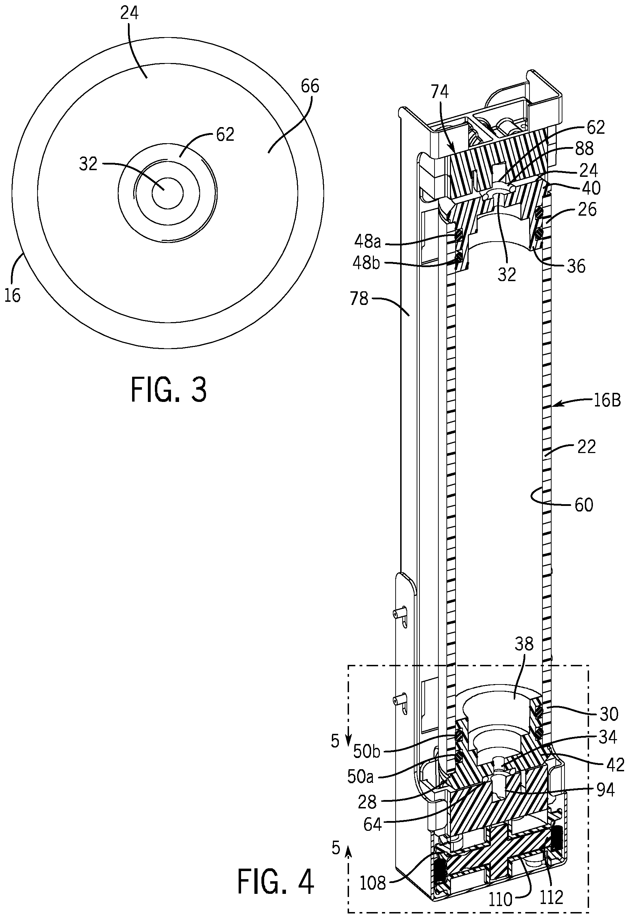

As shown in FIGS. 4-6 and 8, each end plug 24, 28 of filter cartridge 16B includes a respective narrow inner neck portion 36, 38 received within the filter body and a relatively wide cap portion 40, 42 disposed outside of the filter body 22. The interior neck portion 36 of the first end plug 24 is configured to be disposed within the filter body 22 at the first end 26 thereof. Similarly, the interior neck portion 38 of the second end plug 28 is configured to be disposed within the filter body 22 at the second end 30 thereof. The outer peripheries of the neck portions 36 and 38 are sealed against the inner peripheral surface of the filter body 22 as described below while being able to move axially within the filter body 22 similarly to the manner in which a piston moves within a cylinder. As a result, the end plugs 24, 28 are able to move axially with respect to the filter body 22 in response to forces thereon.

Referring again to FIGS 4-6 and 8, each end plug 24, 28 may further include a stepped portion 45, 47 disposed between the respective cap portions 40, 42 and neck portions 36, 38. Each stepped portion 45, 47 has an outer diameter larger than the inner diameter of the filter body 22. As a result, the stepped portions 45, 47 and respective neck portions 36, 38 join at a location that forms a respective step 44, 46. Step 44 provides a surface that can abut the first end 26 of the filter body 22 and prevent the first end plug 24 from being inserted too far into the filter body 22. Similarly, step 46 provides a surface that can abut the second end 30 of the filter body 22 and prevent the second end plug 28 from being inserted too far into the filter body 22.

The stepped portions 45, 47 are also configured to have an outer diameter smaller than the outer diameter of the cap portion 40, 42. In turn, an outer surface of the stepped portions 45, 47 is recessed inward from an outer surface of the cap portions 40, 42. As a result, when the end plugs 24, 28 are installed in the ends 26, 30 of the filter body 22 and the steps 44, 46 are in contact or minimally spaced apart from the ends 26, 30 of the filter body 22, a recess 49, 51 is formed between the cap portion 40, 42 and the ends 26, 30 of the filter body 22. The recesses 49, 51 each having a height equal to at least the height of the respective stepped portion 45, 47. Each recess 49, 51 is in the form of a disassembly notch or groove that provides a space configured to receive a tool or a portion of a tool, such as a puller, for removing the end plugs 24, 28 from the end of the filter body 22 without damaging the end plugs 24, 28, the filter body 22, or any seals described below.

Still referring to FIGS. 4-8, one or more peripheral seals 48, 50 is disposed between the outer peripheral surface 56, 58 of the neck portion 36, 38 of each end plug 24, 28 and the inner peripheral surface of the filter body 22. In the illustrated embodiment, each seal 48, 50 comprises an elastomeric O-ring disposed within a respective groove 52, 54 formed on the outer surface 56, 58 of the respective end plugs 24, 28. While the representative embodiment of the invention illustrates first radial seals 48a, 50a and second peripheral seals 48b, 50b disposed on the neck portions 36, 38 of respective end plugs 24, 28, varying embodiments of the invention may use any number of seals 48, 50 mounted on the neck portion of the associated end plug, the filter body 22, or a combination thereof.

In the representative embodiment of the invention, the first peripheral seals 48a, 50a and second peripheral seals 48b, 50b work together to form a seal between the neck portions 36, 38 of the end plugs 24, 28 and an inner surface 60 of the filter body 22 to prevent fluid from leaking between the end plugs 24, 28 and the filter body 22. In addition, the seals are able to move with the plugs 24, 28 as the plugs 24, 28 move axially within the filter body 22, which will be described below in greater detail.

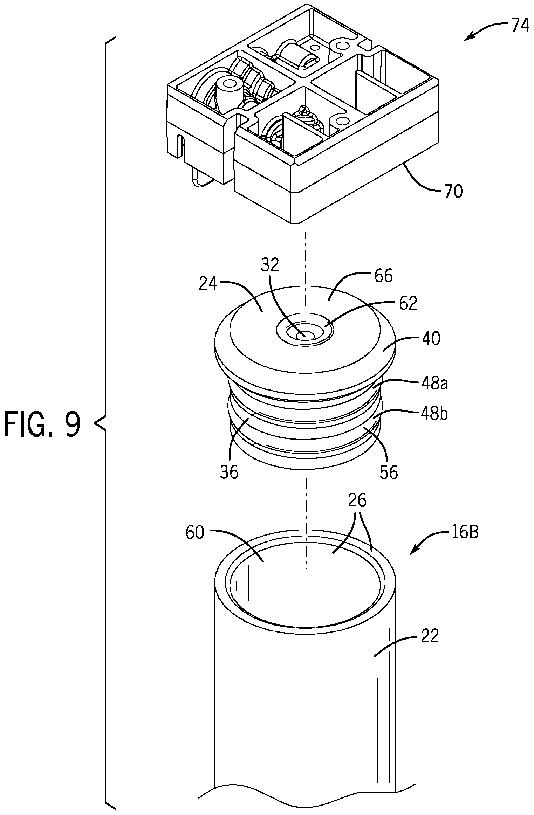

As mentioned above, the outer diameter of the neck portions 36, 38 is less than the inner diameter of the filter body 22 to allow for the end plugs 24, 28 to be inserted into the ends 26, 30 of the filter body 22. As shown in the exploded isometric view of FIG. 9, the outer diameter of the peripheral seals 48, 50 is configured to be slightly larger than the outer diameter of the neck portions 36, 38 and the inner diameter of the filter body 22 when the end plugs 24, 28 are not disposed within the filter body 22. However, during installation of the end plugs 24, 28 within the ends 26, 30 of the filter body 22, the peripheral seals 48, 50 are compressed to match the inner diameter of the filter body 22 and form a seal between then neck portions 36, 38 of the end plugs 24, 28 and the inner surface 60 of the filter body 22. During reprocessing, the end plugs 24, 28 can be removed from the filter body 22 via a tool such as puller, and the elastomeric nature of the peripheral seals 48, 50 allows for expansion back to an outer diameter slightly larger than the inner diameter of the filter body 22.

One or both of the end plugs 24, 28 also may each include a face seal. In the illustrated embodiment, both end plugs 24, 28 include a face seal 62, 64 disposed on a distal end surface 66, 68 of the respective end plug 24, 28. As shown, the face seal 62 of the first end plug 24 surrounds the fluid port 32 of the first end plug 24, while the face seal 64 of the second end plug 28 surrounds the fluid port 34 of the second end plug 28. In the representative embodiment of the invention, the face seals 62, 64 may be disposed within a recessed groove formed in the end surface 66, 68 of the respective end plug 24, 28. In turn, the face seals 62, 64 form a seal between the distal end surfaces 66, 68 of the end plugs 24, 28 and respective holding surfaces 70, 72 of the filter cartridge holder 20. The holding surfaces 70, 72 thus act as seats for the face seals 62, 64. Each face seal 62-64 comprises an elastomeric ring seated in a groove on the end of the associated plug distal end surface 66, 68.

During operation, when untreated fluid flows into the filter cartridge via one of the fluid ports 32, 34 of the end plugs 24, 28, internal fluid pressure builds within the filter cartridge 16. As the internal fluid pressure builds within the filter cartridge 16, a resultant linear force is applied to the end plugs 24, 28. Once the linear force applied to the end plugs 24, 28 surpasses the holding force generated between the peripheral seals 48, 50 an the inner surface 60 of the filter body 22, the end plugs 24, 28 are able to begin axially moving toward the holding surfaces 70, 72. As the end plugs 24, 28 axially move toward the holding surfaces 70, 72, the face seals 62, 64 are compressed to increase the seal between face seals 62, 64 and the holding surfaces 70, 72. The peripheral seals 48, 50 maintain the seal between the end plugs 24, 28 and the filter body 22, while also allowing movement of the end plugs 24, 28 toward the holding surfaces 70, 72. In turn, the face seals 62, 64 are compressed and form a strong, secure seal between the face seals 62, 64 and the holding surfaces 70, 72. Hence, the sealing force provided by the face seals 62, 64 increases with fluid pressure in the filter cartridge 16C and the resultant linear force applied to the end plugs 24, 28. That is, the building of fluid pressure within the filter cartridge 16 assists in maintaining the compression of the face seals 62, 64 and preventing leaking.

After operation and removal from the holder 20, the end plugs 24, 28 can be pulled out of the filter body 22 without damage to the filter body 22, the end plugs 24, 28 or the seals 48, 50, 62, 64. The entire filter cartridge can then be cleaned, refurbished as necessary, and reassembled.

During operation, the face seals 62, 64 are preferably compressed between 20% to 25% in order to maintain a secure seal between the face seals 62, 64 and the holding surfaces 70, 72 without damaging the face seals 62, 64. Compression of the face seals 62, 64 below 20% may result in seeping at the seal between the face seals 62, 64 and the holding surfaces 70, 72. On the other hand, compression of the face seals 62, 64 above 25% may result in damage to the face seals 62, 64. The face seals 62, 64 and end plugs 24, 28 may be sized such that less than 20 psi of fluid pressure within the filter cartridge 16 results in a linear force applied to the end plugs 24, 28 to compress the face seals 62, 64 in the above discussed range of 20% to 25%.

In one example, an internal diameter of the filter body 22 is 50 mm, which results in the first end 26 of the filter body 22 having an area of 1963.5 mm² (3 in²). In the instance of a filter body 22 with an area of 3 in² at its first and second ends 26, 30, the resultant linear force would be: 3 in² × fluid pressure. More specifically, a fluid pressure of 20 psi within the filter cartridge 16 would result in a 60 lb linear force exerted on the end plugs 24, 28. As a result, the resultant linear force exerted on the end plugs 24, 28 from a specific fluid pressure within the filter cartridge 16 can be increased or decreased by adjusting the area of the first and second ends 26, 30 of the filter body 22.

Referring again to FIG. 2, the holder 20 of the filtration system 10 includes a first, upper platen 74 and a second, lower platen 76. A lower surface of the upper platen 74 forms the above discussed holding surface 70, while an upper surface of the lower platen 76 forms the above discussed holding surface 72. The upper platen 74 is mounted to a support frame 78, while the lower platen 76 is mounted to the below described upper disc plate 108 of a clamp mechanism 80. The upper and lower platens 74, 76 are spaced apart from each other by a distance configured to easily receive a filter cartridge, such as filter cartridge 16C between the platens 74, 76. The support frame 78 is formed from two connected portions 78a, 78b that can be positionally adjusted relative to one another as necessary to accommodate the height of the filter cartridge 16.

Each platen 74, 76 may also include one or more guides extending perpendicular to the respective holding surface 70, 72. In the representative embodiment of the invention, the guides are disposed adjacent edges of the platens 74, 76 to assist in horizontally placing the filter cartridge 16 between the holding surfaces 70, 72.

In the representative embodiment of the invention, the upper platen 74 is fixedly mounted to the support frame 78 so as to be stationary in the vertical or axial direction. Meanwhile, the lower platen 76 is movably mounted to the support frame 78 in order to be movable in the vertical direction in order to compress the above-described face seals 62, 64 of the filter cartridge 16 during installation of the filter cartridge 16 in the holder 20 and seal the distal end surfaces 66, 68 and the holding surfaces 70, 72. As shown in FIG. 2, the support frame 78, for instance the support frame portion 78b, may include one or more guide extensions 82 extending inward toward the lower platen 76 and configured to interfit with one or more guide channels 84 formed in the outer sidewalls 86 of the lower platen 76. The interfit between the guide extension 82 of the support frame 78 and the guide channel 84 of the lower platen 76 constrains movement of the lower platen to the vertical or axial direction.

The holder 20 includes an adjustment or clamp mechanism 80 that is configured to selectively alter the axial spacing between the upper and lower platens 74 and 76. The illustrated clamp mechanism moves the lower platen 76 toward and away from the upper platen 74, or both platens 74 and 76 could move. The clamp mechanism 80 will be described in more detail below.

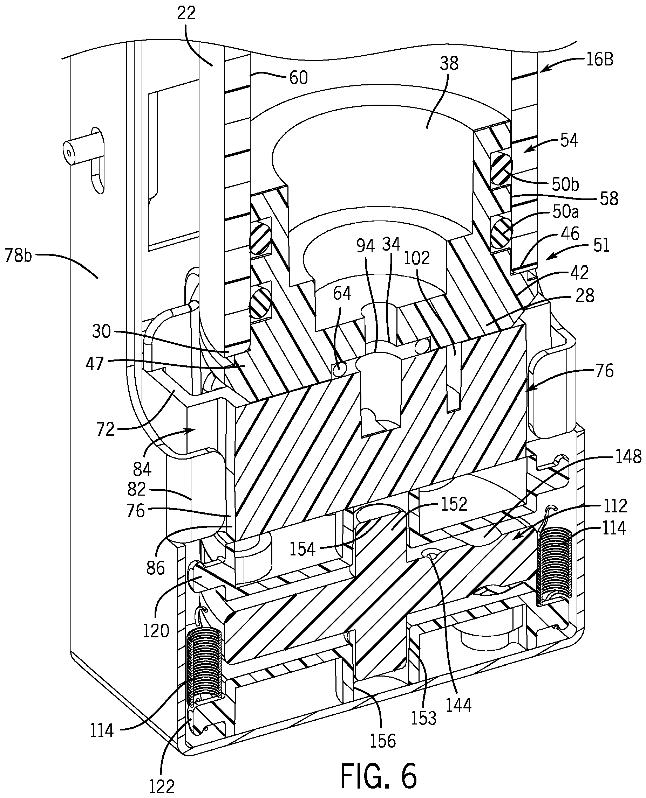

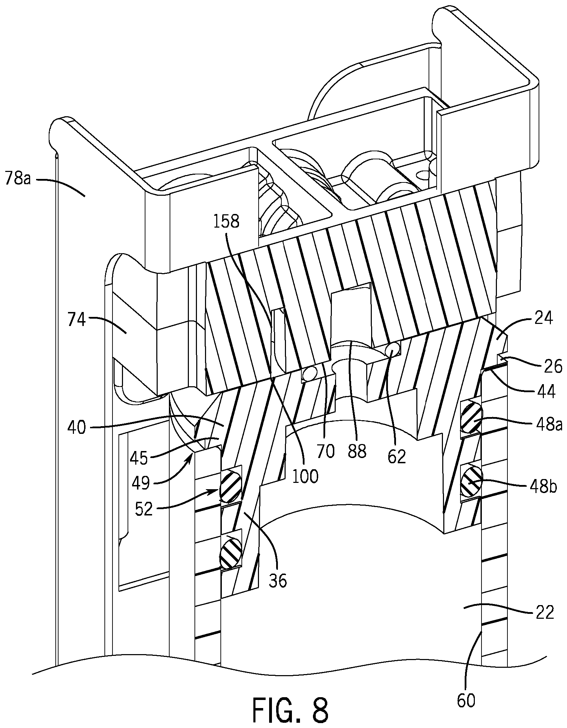

As shown in FIGS. 6 and 8, each of the upper and lower platens 74, 76 each has at least one fluid port formed therein. It is also contemplated that at least one of the upper and lower platens 74, 76 may have no fluid ports formed therein. Referring first to the upper platen 74 shown in FIG. 8, a first fluid port 88 is formed in the outer axial end of the upper platen 74. Port 88 opens into a passage having a first end fluidically coupled to either the inlet port 13 of the housing 12 or the outlet port 15 of the housing 12 and a second end aligned with the fluid port 32 of the first, upper end plug 24 in order to be fluidically coupled to the filter cartridge 16. As a result, the fluid port 88 of the upper platen 74 is able to receive treated fluid from the inlet port 13 and provide the untreated fluid to the filter cartridge 16 when fluidically coupled to the inlet port 13 and to receive treated fluid from the filter cartridge 16 and provide the treated fluid to the outlet port 15 when fluidically coupled to the outlet port 15.

Referring now to the lower platen 76 shown in FIG. 6, a second fluid port 94 is formed within the lower platen 76. In the representative embodiment of the invention, the second fluid port 94 of the lower platen 76 opens into a passage having as a first end fluidically coupled to either the outlet port 15 or the inlet port 13 of the housing 12 and a second end aligned with the fluid port 34 of the second, lower end plug 28 in order to fluidically couple to the filter cartridge 16. As a result, the fluid port 94 of the lower platen 76 is able to receive treated fluid from the filter cartridge 16 and provide the treated fluid to the outlet port 15 when fluidically coupled to the outlet port 15 and to provide the untreated fluid to the filter cartridge 16 when fluidically coupled to the inlet port 13.

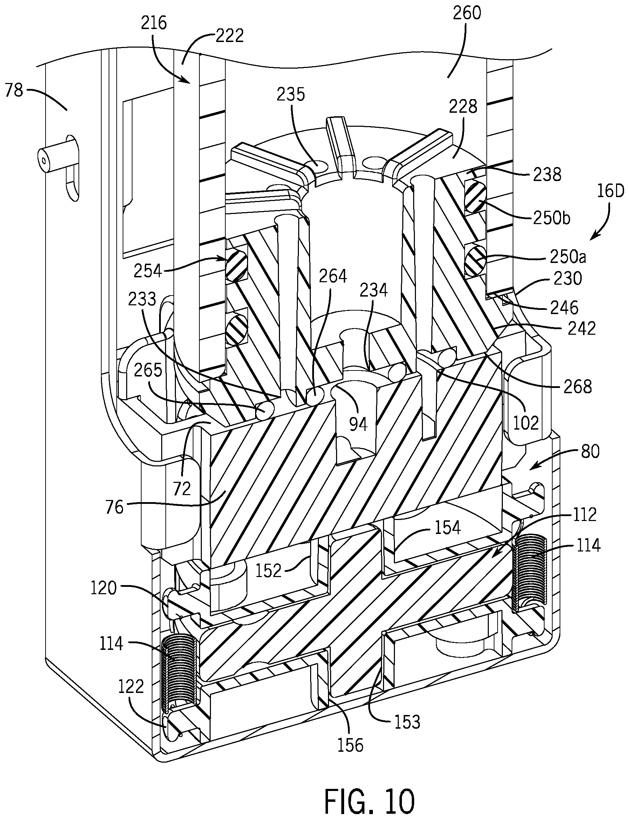

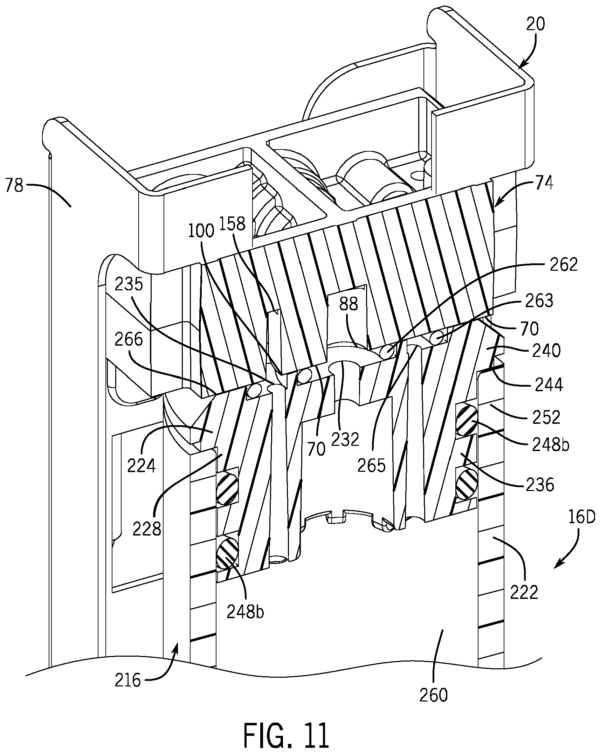

FIGS. 6 and 8 further illustrate the upper and lower platens 74, 76 including additional fluid ports 100, 102, respectively. These ports are non-functional when the filter cartridge has only two ports, as is the case with the filter cartridge 16B. These will be described in further detail with respect to FIGS. 10 and 11, which illustrate their interaction with a RO filter cartridge 16D.

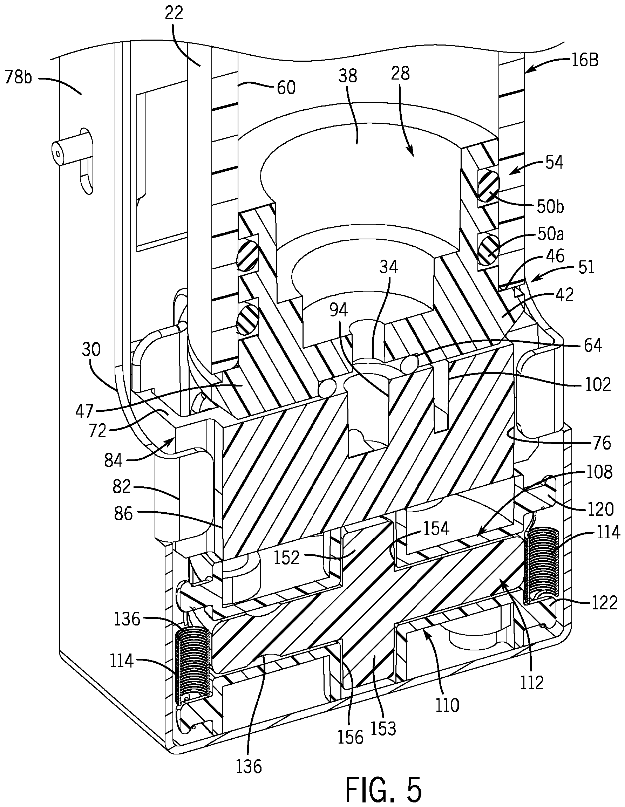

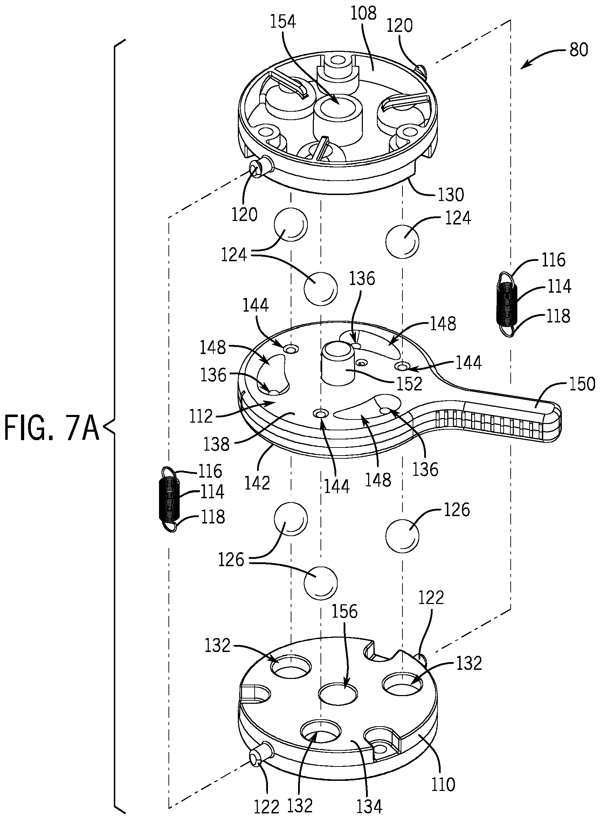

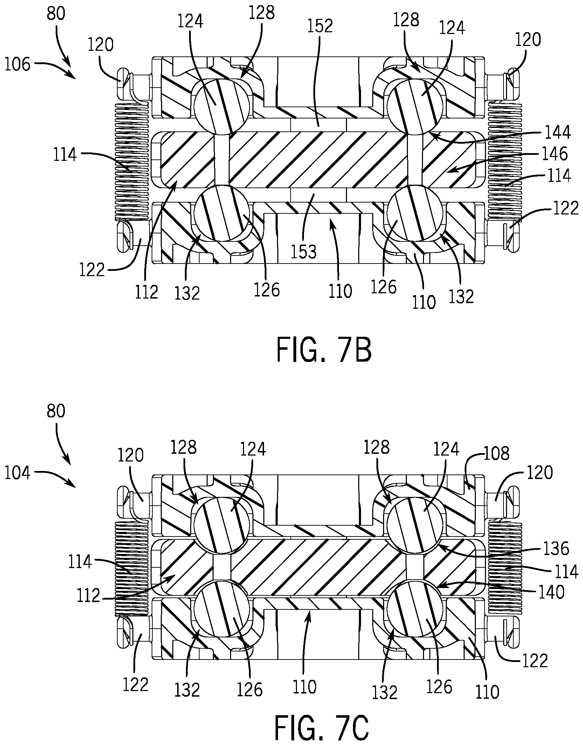

Referring now to FIGS. 7A-7C, the clamp mechanism 80 is shown in greater detail according to an embodiment of the invention. The clamp mechanism 80 is able to translate the lower platen 76 between a first, retracted position 104 in which the filter cartridge 16B may be freely inserted and removed from the holder 20 without the face seals 62 and 64 being sealed against the seats formed by the holding surfaces 70, 72 (See FIGS. 5 and 7C) and a second, extended position 106 (see FIGS. 6 and 7B) in which the filter cartridge is retained with the holder and the face seals 62 and 64 are loosely sealed against the seats formed by the holding surfaces 70, 72.

The clamp mechanism 80 may take any of a variety of manually or power-actuated forms that cause at least the lower platen 76 to move toward the upper platen 74 upon actuation. The clamp mechanism 80 takes the form of a manually actuated cam in this embodiment. The cam is formed from a number of cam followers 124, 126 and a corresponding number of cams 148. The illustrated clamp mechanism 80 additionally includes an upper disc plate 108, a lower disc plate 110, and an intermediary translatable disc plate 112 disposed between the upper and lower disc plates 108, 110. One or more tension elements 114, such as springs, are configured to hold the disc plates 108, 110, 112 together under tension. While the representative embodiment of the invention illustrates the disc plates 108, 110, 112 as being circular in shape, it is contemplated that the term "disc plate" is not limited to a circular plate but may cover plates in varying shapes.

As shown in FIG. 7A, the upper and lower disc plates 108, 110 include extensions 120, 122, respectively extending for a side surface thereof. The extension 120 of the upper disc plate 108 is configured to hold the first end 116 of the tension element 114, while the extension 122 of the lower disc plate 110 is configured to hold the second end 118 of the tension element 114. While the representative embodiment of the invention depicts the use of two tension elements 114, varying embodiments of the invention may use any number of tension elements 114.

A first set of one or many followers 124 are disposed between the upper disc plate 108 and the intermediary translation disc plate 112, while a second set of one or more followers 126 are disposed between the lower disc plate 110 and the intermediary translation disc plate 112. In the illustrated example, each cam follower 124, 126 comprises a ball. Each ball 124, 126 is retained in a corresponding recess 128, 132 formed in the respective upper or lower disc plate 108, 110.

Now referring to the translation disc plate 112, one or more deep detents or recesses 136 are formed in an upper surface 138 of the translation disc plate 112. The one or more deep detents 136 are configured to receive the balls 124 when the clamp mechanism 80 is in the first, retracted position 104. Similarly, one or more deep detents 140 are formed in a lower surface 142 of the translation disc plate 112 and are configured to receive the balls 126 when the clamp mechanism 80 is in the first, retracted orientation 104.

The translation disc plate 112 also includes one or more shallow detents 144 formed in the upper surface 138 of the translation disc plate 112. The shallow detents 144 are configured to receive the balls 124 when the clamp mechanism 80 is in the second, extended position 106. Similarly, one or more shallow detents 146 are formed in the lower surface 142 of the translation disc plate 112 and are configured to receive the balls 126 when the clamp mechanism 80 is in the second, extended orientation 106.

While the illustrated cam includes three sets of cams and cam followers on each side of the translation disc plate 112, more or fewer cam and cam followers could be provided on either side of the translation mechanism.

As shown in FIG. 7A, the cams 148 take the form of ramped grooves in the translation disc plate 112, each of which interacts with an associated cam follower 124, 126. Each groove 148 decreases progressively in depth as it extends from each deep detent 136, 140 toward the adjacent shallow detent 144. The balls 124, 126 ride up the groves upon rotation of the translation disc plate 112 relative to the upper and lower disc plates 108 and 110, increasing the spacing between the translation disc plate 112 and each of the upper and lower disc plates 108 and 110 and moving the lower platen 76 between its compressed and expanded positions.

The translation disc plate 112 is held in axial alignment with the upper and lower disc plates 108, 110 by upper and lower posts 152, 153 that engage tubular receptacles or pockets 154, 156 formed on the upper disc plate 108 and the lower disc plate 110, respectively.

The translation disc plate 112 may also include handle 150 extending laterally outward therefrom. The handle 150 is configured to be actuated by a user in order to translate the translation disc plate 112 between the first and second positions and, as a result, move the clamp mechanism between the first and second positions 104, 106 to open and close the clamp mechanism 80.

In the representative embodiment of the invention, the translation between the first and second positions is a rotation. Further yet, the lower disc plate 110 is in the form of a fixed disc plate 110 that remains stationary during rotation of the translation disc plate 112. In turn, rotation of the translation disc plate 112 causes the translation disc plate 112 to rise and lower as it transitions between the first and second positions 104, 106 to open and close the clamp mechanism 80. The upper disc plate 108 is in the form of a rising disc plate 108 that also rises and lowers as the translation disc plate 112 transitions between the first and second positions 104, 106 to open and close the clamp mechanism 80.

The filter cartridge 16B is readied for use by first inserting the necks of the end plugs fully into the tubular body so that the stops on the end plugs engage the necks of the tubular body. The handle 150 of the translation disc plate 112 is in its deactuated position shown in the holder associated with filter cartridge 16B at this time, and the clamp mechanism 80 is in its retracted position. The filter cartridge 16B is then inserted into the cavity 14 and loaded into the holder 20. The filter cartridge 16B is loosely held in place while the handle 150 is rotated into the same actuated position as the remaining handles in FIG. 1, this rotation causes the balls 124 and 126 of the associated cams to move out of their deep recesses 136, 140, up the ramped grooves 148, and into the shallow seat recesses 144,146 of the lower platen 76 from its retracted position shown in FIG. 5 to its extended position shown in FIG. 6. This clamp closing movement causes the face seals 62 and 64 to engage the seats on the holding surfaces 70 and 72 of the platens 74 and 76 with sufficient force to hold the filter cartridge 16B in place and form a preliminary seal between the face seals 62 and 64 on both ends of the filter cartridge 16B and the associated seats in the holding surfaces 70 and 72. Untreated fluid from port 13 of the filtration system 10 then flows through one of the end plugs 24 and 28 and into the interior of the filter body 22. Fluid pressure in the filter body 22 then imposes a linear force on the inner end surfaces of the end plugs 24 and 26 that is sufficient to overcome the holding forces imposed by the peripheral seals 48, 50 and to force the end plugs 24 and 28 axially outwardly from the filter body 22 with a force that is sufficient to compress the face seals 62 and 64 against their associated seats by the amounts described above. Filtration can then proceed in the normal manner.

Once internal fluid pressure is relieved, the process is simply reversed to remove the filter cartridge 16B from its holder. That is, rotation of the translation disc plate 112 to its deactuated position causes the filter cartridge 16B to be unlocked and then removed from the holder 20. The filter cartridge can then be disassembled for cleaning and/or refurbishing the simply by removing the end plugs 24 and 26 from the tubular body.

Referring now to FIGS. 10-12, an embodiment of the invention using an RO filter cartridge 16D is shown. FIGS. 10 and 11 illustrate cross-sectional views of the holder 20 with the RO filter cartridge 16D at lower and upper ends of the RO filter cartridge 16D. As shown, the RO filter cartridge 16D is similarly constructed to the filter cartridge 16 and includes a filter body 222, an upper end plug 224, and a lower end plug 228.

Each end plug 224, 228 includes a respective interior neck portion 236, 238 and a respective exterior cap end portion 240, 242. The interior neck portion 236 of the first end plug 224 is configured to be disposed within the filter body 222 at the first end 226 thereof Similarly, the interior neck portion 238 of the second end plug 228 is configured to be disposed within the filter body 222 at the second end 230 thereof As such, the interior necks portions 236, 238 of the end plugs 224, 228 have an outer diameter less than an inner diameter of the filter body 222. As a result, the end plugs 224, 228 are configured to move axially within the filter body 222 at the ends 226, 230 of the filter body 222 during operation of the RO filter cartridge 16D.

Meanwhile, the exterior end portions 240, 242 of the respective end plugs 224, 228 are disposed outside of the filter body 222. Each exterior end portion 240, 242 has an outer diameter larger than the inner diameter of the filter body 222. As a result, the exterior end portions 240, 242 and respective neck portions 236, 238 join at a location that forms a respective step 244, 246. Step 244 provides a surface that can abut the first end 226 of the filter body 222 and prevent the first end plug 224 from being inserted too far into the filter body 222. Similarly, step 246 provides a surface that can abut the second end 230 of the filter body 222 and prevent the second end plug 228 from being inserted too far into the filter body 222.

Similar to end plugs 24, 28, each end plug 224, 228 includes one or more peripheral seals 248, 250 disposed within respective grooves 252, 254 formed on their outer surfaces. While the representative embodiment of the invention illustrates first peripheral seals 248a, 250a and second peripheral seals 248b, 250b disposed on the neck portions 236, 238 of respective end plugs 224, 228, varying embodiments of the invention may use any number of peripheral seals 248, 250.

The first peripheral seals 248a, 250a and second peripheral seals 248b, 250b work together to form a seal between the neck portions 236, 238 of the end plugs 224, 228 and an inner surface 260 of the filter body 222 to prevent fluid from leaking between the end plugs 224, 228 and the filter body 222. In addition, the seal is able to move as the plugs 224, 228 move axially within the filter body 222 in response to internal fluid pressure within the filter body 222.

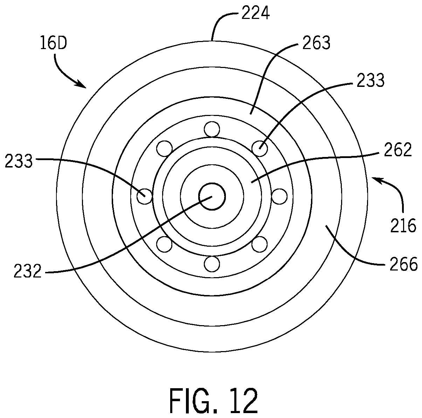

As shown in the top view of FIG. 12, the upper end plug 224 of the RO filter cartridge 16D is similar to the end plug 24 of the filter cartridge 16 shown in FIG. 3 in that it includes a distal end surface 266, a face seal 262 on the distal end surface 266, and a primary fluid port 232 surrounded by the face seal 262 and opening into a passage connecting the fluid port to the interior of the filter body 222. The upper end plug 224 further includes one or more secondary fluid ports 233 disposed outside of the primary face seal 262 and opening into a passage in the end plug 224 that leads to the interior of the filter body 222. In turn, a secondary face seal 263 is disposed on the distal end surface 266 of the end plug 224 to surround the secondary fluid ports 233. In the representative embodiment of the invention, the secondary face seal 263 may be disposed within a secondary recessed groove formed in the distal end surface 266 of the end plug 224.

Likewise, the lower end plug 228 of the RO filter cartridge 16D is similar to the lower end plug 26 of the filter cartridge 16 and includes a distal end surface 268, a face seal 264 on the distal end surface 268, and a primary fluid port 234 surrounded by the face seal 264 and opening into the interior of the filter body 222. The lower end plug 228 may also include one or more secondary fluid ports 235 disposed outside of the primary face seal 264 and opening into the interior of the filter body 222. In turn, a secondary face seal 265 is disposed on the distal end surface 268 of the end plug 228 to surround the secondary fluid ports 235. The distal end surface 266 of the lower end plug 228 may also include a secondary recessed groove to receive the secondary face seal 263.

When the RO filter cartridge 16D is placed in the filter cartridge holder 20, the primary face seal 262 of the upper end plug 224 surrounds the primary fluid port 232 of the upper end plug 224 and provides a seal between the distal end 266 of the upper end plug 224 and the seat formed on upper holding surface 70 to prevent leaking associated with the primary fluid port 232, while the primary face seal 264 of the lower end plug 228 surrounds the primary fluid port 234 of the lower end plug 228 and provides a seal between the distal end 268 of the lower end plug 228 and the seat formed on the lower holding surface 72 to prevent leaking associated with the primary fluid port 234.

In addition, the primary and secondary face seals 262, 263 of the upper end plug 224 surround the secondary fluid ports 233 of the upper end plug 224 and provide a seal between the distal end 266 of the upper end plug 224 and the seat on upper holding surface 70. Likewise, the primary and secondary face seals 264, 265 of the lower end plug 228 surround the secondary fluid ports 235 of the lower end plug 228 and provide a seal between the distal end 268 of the lower end plug 228 and the seat on the lower holding surface 72.

In practice, the passage coupled to one of the of the secondary fluid ports 100 and 102 likely will be a dead end such that the RO filter cartridge 16D has only a single effective wastewater outlet. Similarly, the secondary fluid ports 100 and 102 in the platens 74 and 76 associated with the remaining, non-RO, filter cartridges 16A-16C also lead to dead ends. However, the illustrated design provides for standardization of design of both the plugs 224 and 228 and platens 74 and 76.

The RO cartridge 16D can be assembled or disassembled loaded into its holder, sealed in place, and operated in the same manner as the filter cartridge 16B as described above.

Although the best mode contemplated by the inventors of carrying out the present invention is disclosed above, practice of the above invention is not limited thereto. It will be manifest that various additions, modifications and rearrangements of the features of the present invention may be made without deviating from the spirit and the scope of the underlying inventive concept.

It should be appreciated that such a development effort might be complex and time consuming, but would nevertheless be a routine undertaking of design, fabrication, and manufacture for those of ordinary skill having the benefit of this disclosure. Nothing in this application is considered critical or essential to the present invention unless explicitly indicated as being "critical" or "essential."

### List of References

- 10: filtration system
- 12: housing
- 13: first/inlet port
- 14: cavity
- 15: second/outlet port
- 16A-D: filter cartridge
- 17: third/drain port
- 18: access hatch or door
- 20: filter cartridge holder
- 22: filter body
- 24: first, upper end plug
- 26: first, upper end
- 28: second, lower end plug
- 30: second, lower end
- 32: first fluid port
- 34: second fluid port
- 36: interior neck portion
- 38: interior neck portion
- 40: first cap portion
- 42: second cap portion
- 44: step
- 45: stepped portion
- 45: step
- 47: stepped portion
- 48: first peripheral seal
- 48a: first radial seal
- 48b: second peripheral seal
- 49: recess
- 50: second peripheral seal
- 50a: first radial seal
- 50b: second peripheral seal
- 51: recess
- 52: groove
- 54: groove
- 56: outer peripheral surface
- 58: outer peripheral surface
- 60: inner peripheral wall/surface
- 62: first face seal
- 64: second face seal
- 66: distal end surface
- 68: distal end surface
- 70: first holding surface
- 72: second holding surface
- 74: first, upper platen
- 76: second, lower platen
- 78: support frame
- 78a: portion
- 78b: portion
- 80: clamp mechanism
- 82: guide extension
- 84: guide channel
- 86: outer sidewall
- 88: first fluid port
- 94: second fluid port
- 100: fluid port
- 102: fluid port
- 104: first, retracted position/orientation
- 106: second, extended position
- 108: upper disc plate
- 110: lower disc plate
- 112: intermediary translatable disc plate
- 114: tension element
- 116: first end of the tension element
- 118: second end of the tension element
- 120: extension
- 122: extension
- 124: cam follower/ball
- 126: cam follower/ball
- 128: recess
- 132: recess
- 136: deep detent/recess
- 138: upper surface
- 140: deep detent
- 142: lower surface
- 144: shallow detent/ seat recess
- 146: shallow detent/ seat recess
- 148: cam/ ramped groove
- 150: handle
- 152: lower post
- 153: lower post
- 154: tubular receptacles/pockets
- 156: tubular receptacles/pockets
- 222: filter body
- 224: first/upper end plug
- 226: first end
- 228: second/lower end plug
- 230: second end
- 232: primary fluid port
- 233: secondary fluid port
- 234: primary fluid port
- 235: secondary fluid port
- 236: interior neck portion
- 238: interior neck portion
- 240: exterior cap end portion
- 242: exterior cap end portion
- 244: step
- 246: step
- 248: peripheral seal
- 248a: first peripheral seal
- 248b: second peripheral seal
- 250: peripheral seal
- 250a: first peripheral seal
- 250b: second peripheral seal
- 252: groove
- 254: groove
- 260: inner surface
- 262: primary face seal
- 263: secondary face seal
- 264: primary face seal
- 265: secondary face
- 266: distal end surface
- 268: distal end surface

## Claims

1. A filter cartridge (16) comprising:
a filter body (22) having a first end (26) , a second end (30), and an inner peripheral surface (60);
an end plug (24) disposed in the first end (26) of the filter body (22), the end plug (24) having an inner end extending into the filter body (22), an outer end, and an outer peripheral surface (56);
a peripheral seal (50) located between the outer peripheral surface (56) of the end plug (24) and the inner peripheral surface (60) of the filter body (22),
wherein the end plug (24) is configured to move axially away from the filter body (22) in response to fluid pressure within the filter body (22).

2. The filter cartridge (16) of claim 1, further comprising a face seal (62; 64) on an outer end surface of the end plug (24; 28) and surrounding a fluid port (32; 34) located on the other end surface of the end plug (24; 28).

3. The filter cartridge (16) of claim 1 or 2, wherein the end plug is a first end plug (24), and further comprising:
a second end plug (28) disposed in the second end (30) of the filter body (22), the second end plug (28) having an inner end extending into the filter body (22), an outer end, and an outer peripheral surface (56; 58), and a fluid port formed in the outer end; and
a peripheral seal (48; 50) located between the outer peripheral surface (56; 58) of the second end plug (28) and the inner peripheral surface (60) of the filter body (22);
wherein the second end plug (28) is configured to move axially away from the filter body (22) in response to fluid pressure within the filter body (22).

4. The filter cartridge (16) of claim 3, wherein at least one end plug (24; 28) includes a stepped portion (45; 47) disposed between the cap portion (40; 42) and the inner neck portion (36; 38), the stepped portion (45; 47) having a larger diameter than that of the inner neck portion (36; 38) and a smaller diameter than that of the cap portion (40; 42).

5. The filter cartridge (16) of claim 4, further comprising a recess (49; 51) aligned with the stepped portion (45; 47) and disposed between the cap portion (40; 42) of the end plug (24; 28) and the respective end of the filter body (22), wherein the recess (49; 51) is configured to receive a removal tool..

6. The filter cartridge (16) of claim 2, wherein at least two peripheral seals (48a, 48b; 50a, 50b) are provided between the outer peripheral surface (56; 58) of each end plug (24; 28) and the inner peripheral surface (60) of the filter body (22).

7. The filter cartridge of any of the preceding claims, wherein at least one end plug (24; 28) further includes a secondary face seal (263) surrounding at least one secondary fluid port (233; 235).

8. A method comprising:
providing a tubular filter body (222) having first (226) and second opposed ends (230) and an inner peripheral surface (60);
installing an end plug (24; 28) into the first end of the filter body (222), the end plug (24; 28) having a face seal (62; 64) and a port located on an outer axial end surface thereof, wherein, once installed, wherein the end plug (24; 28) is able to move axially away from the filter body (222) under fluid pressure within the filter body (222) to increase a sealing force between the face seal (62; 64) and a seat but is sealed against the inner peripheral surface (60) of the filter body (222).

9. The method of claim 8, wherein the end plug is a first end plug (24) , and further comprising installing a second end plug (28) into the second end (30) of the filter body (222), the second end plug (28) having at least one face seal (62; 64) and at least one port located on an outer axial end surface thereof, wherein, once installed the second end plug (28) is able to move axially away from the filter body (222) under fluid pressure within the filter body (222) but is sealed against the inner peripheral surface (60) of the filter body (222).

10. The method of claim 8 or claim 9, further comprising:
inserting the filter cartridge (16) into a filter cartridge holder (20) such that first and second ends of the filter cartridge (16) are located axially between first and second platens (74; 76) of the filter cartridge holder (20), the seat being located on the first platen (74),
actuating a clamp mechanism (80) to decrease an axial spacing between the first and second platens (74; 76) and to compress the face seal (62; 64) against the seat, and
introducing a pressurized liquid into the filter body (222) to force the end plug away from the filter body (222) and to further compress the face seal (62; 64) against the seat.

11. The method of any of claims 8-10, further comprising inserting a removal tool into a recess (49; 51) between the end plug (24; 28) and the first end of the filter body (222) to remove the end plug (24; 28) from the first end of the filter body;
wherein the recess (49; 51) is aligned with a stepped portion (45; 47) of the end plug (24; 28) that is disposed between a cap portion (40; 42) of the end plug (24; 28) and an inner neck portion (36; 38) of the end plug (24; 28), the stepped portion (45; 47) having a larger diameter than that of the inner neck portion (36; 38) and a smaller diameter than that of the cap portion (40; 42).

12. A filtration system (10) comprising:
housing (12) having in inlet port (13), an outlet port (15), and a cavity (14) adapted to receive a filter cartridge (16) according to any of the claims 1 to 7; a filter cartridge holder (20) disposed in the cavity (14) and comprising:
a first platen (74) having a first holding surface (70);
a second platen (76) having a second holding surface (72), and
a clamp mechanism (80) for sealingly sandwiching the filter cartridge (16), a clamp mechanism (80) includes a translation disc plate (112) that is disposed adjacent at least one of the first and second platens (74; 76) and that can be selectively actuated to decrease an axial spacing between the first and second platens (74; 76).

13. The filtration system assembly of claim 12, wherein at least one of the first and second platens (74; 76) of the filter cartridge holder (20) has a fluid port (88) formed therethrough in alignment with a first fluid port (32) of the filter cartridge (16), and wherein at least one of the first and second platens (70; 72) has a fluid port (94) formed therethrough in alignment with a second fluid port (34) of the filter cartridge (16).

14. The filtration system of claim 12 or claim 13, wherein the clamp mechanism (80) further includes
upper and lower disc plates (108; 110) located on opposite sides of the translation disc plate (112), the upper disc plate (108) being attached to the filter cartridge holder (20) and the lower disc plate (110) being attached to one of the first and second platens (74; 76);
a cam mechanism disposed between the translation disc plate (112) and at least one of the upper and lower disc plates (108; 110), the cam mechanism being operable, upon actuation of the translation disc plate (112), to cause the clamp mechanism to extend and retract; and
one or more tension elements (114) holding the upper disc plate(108), the translation disc plate (112), and the lower disc plate (110) together under tension.
